# EUROPEAN PATENT SPECIFICATION

(11) **EP 3 395 595 B1**
(45) Date of publication and mention of the grant of the patent: **09.09.2020**
(21) Application number: 18162410.7
(22) Date of filing: 16.03.2018
(51) Int. Cl.: B60J 10/74, B60J 10/76, B60J 10/78

(54) **WINDOW STRUCTURE FOR AUTOMOBILE AND AUTOMOBILE**
FENSTERSTRUKTUR FÜR EIN KRAFTFAHRZEUG UND KRAFTFAHRZEUG
STRUCTURE DE FENÊTRE POUR AUTOMOBILE ET AUTOMOBILE

(30) Priority: 26.04.2017 CN 201710283234
(43) Date of publication of application: 31.10.2018
(73) Proprietor: PSA Automobiles SA, 78300 Poissy (FR)
(72) Inventor: LI, XIUCHENG, Shanghai, 200233 (CN); WU, YUNZHU, Shanghai,, 200233 (CN); ZHOU, YING, Shanghai (CN); BOUTEILLER, BERTRAND, 92800 PUTEAUX (FR); ZHANG, CHUN DONG, Shanghai, 200233 (CN); WU, LUOFEI, Shanghai, 200233 (CN); ZHANG, YIN, Shanghai, 200233 (CN)

(56) References cited:
- DE-A1- 10 046 358
- JP-A- S6 060 028
- JP-A- S58 224 810
- JP-A- 2010 089 694
- JP-U- H0 351 616

## Description

### FIELD OF TECHNOLOGY

The present disclosure relates to the technical field of automobile parts, in particular to a window structure for an automobile and an automobile, in particular to a window structure for an automobile, which is simple in structure, convenient to assemble and low in production costs and capable of effectively improving the sealing effect and noise reduction effect, and an automobile.

### BACKGROUND

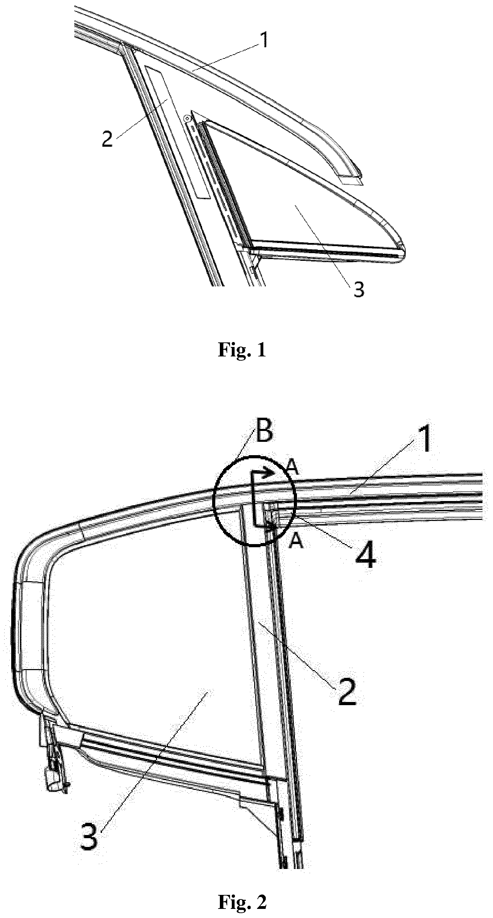

At present, in the existing automobile structure, there are various fit modes between a sealing strip of a window glass run channel for an automobile and a division bar in order to solve the problems of air leakage noise and rain leakage noise during the driving. For example, as shown in Fig. 1, a glass run channel 1, a fixed window 3 and a division bar 2 are integrated so that the entire structure is heavy and by adopting such structure, such problems as difficulty in installation and low installation efficiency are generated and the connection between the glass run channel 1 and fixed window 3 is prone to bending and breaking during installation and thus the installation quality cannot be guaranteed. As another example, the glass run channel 1 and the fixed window 3 are integrated and attached to the division bar 2 by a 3M adhesive tape for sealing. However, such structure has the problems of more number of parts, low installation efficiency, increased production costs and installation costs and poor economy; and the connection between the glass run channel 1 and fixed window 3 is prone to bending and breaking during installation and thus the installation quality cannot be guaranteed. As still another example, the glass run channel 1, fixed window 3 and division bar 2 are individually manufactured, a boot-shaped member is additionally disposed at the top of the division bar 2 to form boot-shaped sealing and it is necessary to arrange additionally a sealing foam layer at the inner side of the division bar 2; since the top of the division bar 2 is the junction of the glass run channel 1, fixed window 3 and division bar 2, there is fit-up gap, so that the problem of air leakage still comes even with sealing foam layer, thereby resulting in poor sealing effect; at the same time, the boot-shaped member additionally disposed results in defect in appearance. It is difficult to implement this fit mode in projects with higher requirements for the appearance quality.

The documents JPH0351616 U, JPS6060028 A, JPS58224810 A, and JP2010089694 A, constitute a prior art for sealing strips near a window sash.

### SUMMARY

The first aspect of the present disclosure is to provide a window structure for an automobile, which is simple in structure, convenient to assemble and low in production costs and capable of effectively improving the sealing effect and noise reduction effect so as to solve such problems as difficulty in installation, low installation efficiency, poor appearance and high production costs and installation costs of the existing installation structure of the glass run channel and division bar.

The second aspect of the present disclosure is to provide an automobile, which is simple in structure, convenient to assemble and low in production costs and capable of effectively improving the sealing effect and noise reduction effect so as to solve such problems as difficulty in installation, low installation efficiency, poor appearance and high production costs and installation costs of the existing installation structure of the glass run channel and division bar adopted in the existing automobile.

According to the first aspect, one of the embodiments provides a window structure comprising a window sash, a sealing strip and a division bar, wherein a glass run channel is arranged on the window sash, the sealing strip is arranged within the glass run channel, the division bar is connected with the window sash for dividing the window sash; the sealing strip comprises a sealing strip body provided with a first sealing lip and the first sealing lip extends out of the glass run channel and is in seal fit with the top of the division bar.

In one of the embodiments, the first sealing lip comprises an abutted portion and an embedded portion extending out from the abutted portion to the top of the division bar, the abutted portion has an abutted arc-shaped surface fitted with the bottom of the glass run channel and the embedded portion is embedded within the gap between the top of the division bar and the glass run channel.

In one of the embodiments, the sealing strip body is also provided with a second sealing lip arranged below the first sealing lip and the second sealing lip is closely attached to the inner surface of the division bar.

In one of the embodiments, the height of the second sealing lip is greater than the distance between the inner surface of the division bar and the sealing strip body.

In one of the embodiments, the sealing strip body and first and second sealing lips are all made of elastic material.

In one of the embodiments, the elastic material is a rubber material with waterproofness.

In one of the embodiments, the sealing strip body and first and second sealing lips are integral injection-molded structures.

According to the second aspect, an automobile comprising the window structure described above is provided.

According to the present disclosure, a window structure comprising a window sash, a sealing strip and a division bar is provided, wherein a glass run channel is arranged on the window sash, the sealing strip is arranged within the glass run channel, the division bar is connected with the window sash for dividing the window sash; the sealing strip comprises a sealing strip body provided with a first sealing lip and the first sealing lip extends out of the glass run channel and is in seal fit with the top of the division bar. The window structure of the present disclosure is simple in structure and convenient to manufacture and assemble; since only a first sealing lip is additionally arranged on the existing sealing strip body and it extends out of the glass run channel and is in seal fit with the top of the division bar, both low production costs and good economy are achieved; meanwhile, good sealing effect is realized and the air leakage caused by a fit-up gap between the glass run channel and division bar is effectively solved by adopting the sealing strip body of the present disclosure. The window structure provided by the present disclosure has the advantage of strong practicability and is conducive to standardized production and promotion.

### BRIEF DESCRIPTION OF THE DRAWINGS

Fig. 1 is a schematic diagram of the connection structure of a window sash, a sealing strip and a division bar according to the prior art;
Fig. 2 is a schematic diagram of the connection structure of a window sash, a sealing strip and a division bar according to an embodiment of a window structure and an automobile of the present disclosure;
Fig. 3 is a cross-sectional view of the connection structure taken along the A-A line in Fig. 2; and
Fig. 4 is a cross-sectional view of the connection structure taken in B region in Fig. 2.

### Description of Reference Signs

| | | | |
|---|---|---|---|
| 1 | glass run channel | 2 | division bar |
| 3 | fixed window | 4 | sealing strip body |
| 4-1 | first sealing lip | 4-1-1 | abutted portion |
| 4-1-2 | embedded portion | 4-2 | second sealing lip |

### DESCRIPTION OF THE EMBODIMENTS

Hereinafter, to make the objectives, solutions and advantages of the embodiments of the present disclosure more comprehensible, the solutions in the embodiments of the present disclosure are clearly and completely described in conjunction with accompanying drawings. Apparently, the described embodiments are a part but not all of the embodiments of the present disclosure. All other embodiments obtained by a person of ordinary skill in the art based on the embodiments above shall fall within the protection scope of the present disclosure.

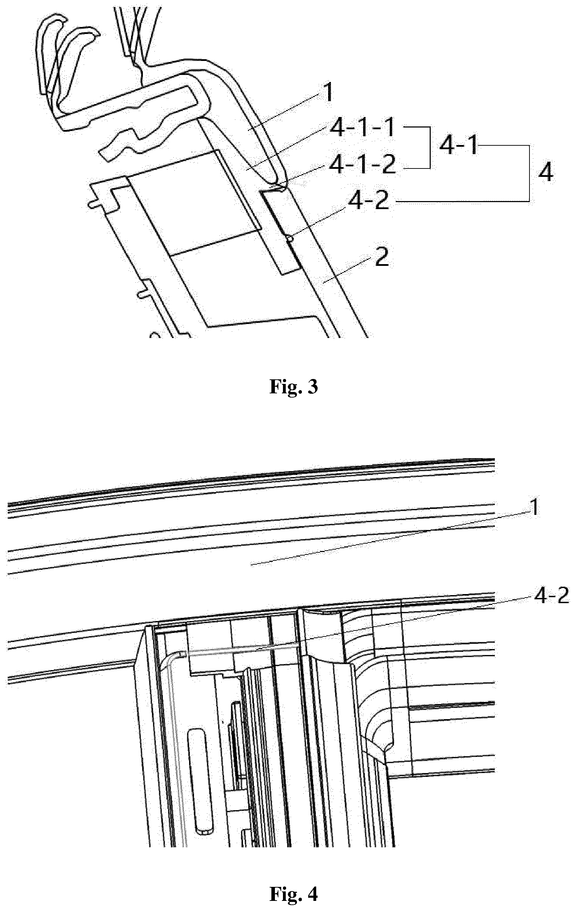

As shown in Figures 2 to 4, one of the embodiments provides a window structure comprising a window sash, a sealing strip and a division bar 2, wherein a glass run channel 1 is arranged on the window sash and is used for allowing the window glass to smoothly move along the lifting surface to further reduce the vibration and noise of the window glass during the driving of the vehicle; the sealing strip is arranged within the glass run channel 1 and the structure of the sealing strip matches that of the glass run channel 1 such that there is no excessive gap between the sealing strip and the window glass and the sealing strip has main effect on the window glass and glass run channel 1 by the deformation of a lip, thereby allowing the window glass to move more smoothly; the division bar 2 is connected with the window sash for dividing the window sash. Specifically, in this embodiment, the sealing strip comprises a sealing strip body 4 provided with a first sealing lip 4-1 and the first sealing lip 4-1 extends out of the glass run channel 1 and is in seal fit with the top of the division bar 2 so as to provide the sealing connection between the division bar 2 and glass run channel 1, good sealing effect and strong applicability and it is conductive to standardized production and promotion and the problem of air leakage caused by a fit-up gap is effectively solved. Furthermore, by adopting the sealing strip body 4, the sealing strip is simple in structure and convenient to manufacture and assemble; since only a first sealing lip is additionally arranged on the existing sealing strip body and it extends out of the glass run channel and is in seal fit with the top of the division bar, which gives low production costs.

Specifically, the first sealing lip 4-1 comprises an abutted portion 4-1-1 and an embedded portion 4-1-2 extending out from the abutted portion 4-1-1 to the top of the division bar 2, wherein the abutted portion 4-1-1 has an abutted arc-shaped surface fitted with the bottom of the glass run channel 1 and the embedded portion 4-1-2 is embedded within the gap between the top of the division bar 2 and the glass run channel 1. In this embodiment, the first sealing lip 4-1 comprises the abutted portion 4-1-1 and embedded portion 4-1-2 and the first sealing lip 4-1 has an L-like cross-sectional shape. The connection reliability between the sealing strip body 4 and the glass run channel 1 is improved by providing the abutted portion 4-1-1 of which the shape is fitted with that of the bottom of the glass run channel 1 and the sealing connection between the division bar 2 and glass run channel 1 is realized by providing the embedded portion 4-1-2 embedded within the gap between the top of the division bar 2 and the glass run channel 1 such that the problems of air leakage and poor sealing property in existing window structure are solved.

Further, the sealing strip body 4 is also provided with a second sealing lip 4-2 arranged below the first sealing lip 4-1 and the second sealing lip 4-2 is closely attached to the inner surface of the division bar 2. In order to further improve the sealing property of the entire window structure, in this embodiment, the sealing strip body 4 is also provided with a second sealing lip 4-2 which constitutes a sealing strip having two sealing lips together with the first sealing lip 4-1. In particular, after the installation of the division bar 2 and the sealing strip and glass run channel 1 completes, the second sealing lip 4-2 is closely attached to the inner surface of the division bar 2 such that a pre-tightening force is generated between the sealing strip and division bar 2 to prevent the gap or relative displacement between the sealing strip and division bar 2 under the external force and further enhance the reliability and tightness of the connection between the sealing strip and division bar 2. In addition, the second sealing lip 4-2 is further provided with an extension extending toward the fixing window 3 so as to further improve the reliability of the connection between the fixing window 3, glass run channel 1 and division bar 2.

Preferably, the height of the second sealing lip 4-2 is greater than the distance between the inner surface of the division bar 2 and the sealing strip body 4. In this embodiment, the second sealing lip 4-2 is connected with the inner surface of the division bar 2 by interference fit. After the assembly is completed, the deformation of the second sealing lip 4-2 is between 0.3 mm to 0.5 mm, wherein the height of the second sealing lip 4-2 is in the range of 0.8 mm to 1 mm. Specifically, the height of the second sealing lip 4-2 and the deformation thereof due to the pressing force of the division bar 2 can be selected according to the actual implementation conditions.

Specifically, the sealing strip body 4 and first and second sealing lips 4-1 and 4-2 are all made of elastic material. By manufacturing the sealing strip body 4 and first and second sealing lips 4-1 and 4-2 from the elastic material, on one hand, the difficulty in assembly for an assembly operator is greatly reduced, easiness in breakage during the assembly is prevented and the assembly quality is also effectively improved, on the other hand, since the elastic material is deformed significantly, it can be quickly restored to its original state after stress relaxation so as to fill the gap between the top of the division bar 2 and glass run channel 1, thereby effectively achieving the sealing effect.

Preferably, in this embodiment, the elastic material is a rubber material with waterproofness. Since the rubber material is a high-elasticity polymer compound, the sealing effect between the top of the division bar 2 and glass run channel 1 can be effectively ensured; and the rubber material is cheap. In addition, the rubber material with waterproofness can effectively prevent rain water from entering the vehicle through the gap between the top of the division bar 2 and glass run channel 1 while ensuring air tightness, thereby improving the waterproof sealing property of the entire window structure.

Preferably, the sealing strip body 4 and first and second sealing lips 4-1 and 4-2 are integral injection-molded structures. By adopting the above-mentioned integral injection-molded structures, the stability of overall structure of the sealing strip is effectively ensured so that the service life of the sealing strip is prolonged; and the number of parts is greatly decreased and both production time and assembly time are effectively reduced, thereby reducing the production costs.

In particular, in order to ensure the sealing effect of the glass run channel 1 and division bar 2 in the present application, the sealing strip body 4 needs to meet four requirements: firstly, the fit-up gap between the glass run channel 1 and division bar 2 is in the range of 0.3 mm to 0.5 mm; secondly, the length of the sealing strip body 4 from the division bar 2 to fixed window 3 is about 20 mm and the overlapping region of the sealing strip body 4 between the division bar 2 and fixed window 3 should be ensured to be not less than 4 mm; thirdly, the width of the sealing strip body 4 is about 9.2 mm and it is generally not less than 5 mm; fourthly, the height of the second sealing lip 4-2 is in the range of 0.8 mm to 1mm, if the height of the second sealing lip 4-2 is too small, the second sealing lip 4-2 can't be connected with the division bar 2 by interference fit and it is impossible to achieve the beneficial effect of improving the reliability and tightness of the connection between the sealing strip and division bar 2; and if the height of the second sealing lip 4-2 is too large, the assembly of the division bar 2 can be affected and the fit-up gap exists between the division bar 2 and glass run channel 1.

The present disclosure also provides an automobile. Since it is provided with the seal structure of the door outer beltline molding described above, it has the benefit effects above, and details are not described herein again.

According to the present disclosure, a window structure comprising a window sash, a sealing strip and a division bar is provided, wherein a glass run channel is arranged on the window sash, the sealing strip is arranged within the glass run channel, the division bar is connected with the window sash for dividing the window sash; the sealing strip comprises a sealing strip body provided with a first sealing lip and the first sealing lip extends out of the glass run channel and is in seal fit with the top of the division bar. The window structure of the present disclosure is simple in structure and convenient to manufacture and assemble; since only a first sealing lip is additionally arranged on the existing sealing strip body and it extends out of the glass run channel and is in seal fit with the top of the division bar, both low production costs and good economy are achieved; meanwhile, good sealing effect is realized and the air leakage caused by a fit-up gap between the glass run channel and division bar is effectively solved by adopting the sealing strip body of the present disclosure. The window structure provided by the present disclosure has the advantage of strong practicability and is conducive to standardized production and promotion.

It should be noted that the foregoing embodiments are merely intended for describing the technical solutions of the present disclosure, but not for limiting the present disclosure. Although the present disclosure is described in detail in conjunction with the foregoing embodiments, it should be understood by a person skilled in the art that: modifications can be made to the technical solutions described in the foregoing embodiments, or equivalent alternatives are made to some of the technical features thereof.

## Claims

1. A window structure comprising a window sash, a sealing strip and a division bar (2), wherein a glass run channel (1) is arranged on the window sash, the sealing strip is arranged within the glass run channel, the division bar is connected with the window sash for dividing the window sash; the sealing strip comprises a sealing strip body (4) provided with a first sealing lip (4-1) and the first sealing lip extends out of the glass run channel and is in seal fit with the top of the division bar,
**characterized in that** the sealing strip body is also provided with a second sealing lip (4-2) arranged below the first sealing lip and the second sealing lip is closely attached to the inner surface of the division bar.

2. The window structure according to claim 1, **characterized in that**, the first sealing lip comprises an abutted portion and an embedded portion extending out from the abutted portion to the top of the division bar, wherein the abutted portion has an abutted arc-shaped surface fitted with the bottom of the glass run channel and the embedded portion is embedded within the gap between the top of the division bar and the glass run channel.

3. The window structure according to claim 1, **characterized in that**, the height of the second sealing lip is greater than the distance between the inner surface of the division bar and the sealing strip body.

4. The window structure according to claim 1, **characterized in that**, the sealing strip body and first and second sealing lips are all made of elastic material.

5. The window structure according to claim 4, **characterized in that**, the elastic material is a rubber material with waterproofness.

6. The window structure according to claim 1, **characterized in that**, the sealing strip body and first and second sealing lips are integral injection-molded structures.

7. An automobile comprising the window structure according to any one of claims 1-6.

## Patentansprüche

1. Fensterkonstruktion, umfassend einen Fensterflügel, eine Dichtleiste und eine Teilungsleiste (2), wobei ein Glaslaufkanal (1) auf dem Fensterflügel angeordnet ist, die Dichtleiste innerhalb des Glaslaufkanals angeordnet ist, die Teilungsleiste mit dem Fensterflügel verbunden ist, um den Fensterflügel zu unterteilen; die Dichtleiste einen Dichtleistenkörper (4) umfasst, der mit einer ersten Dichtlippe (4-1) versehen ist, und die erste Dichtlippe sich aus dem Glaslaufkanal heraus erstreckt und in Dichtungspassung mit der Oberseite der Teilungsleiste steht,
**dadurch gekennzeichnet, dass** der Dichtungsstreifenkörper auch mit einer zweiten Dichtlippe (4-2) versehen ist, die unterhalb der ersten Dichtlippe angeordnet ist, und die zweite Dichtlippe eng an der Innenfläche der Trennleiste befestigt ist.

2. Fensterstruktur nach Anspruch 1, **dadurch gekennzeichnet, dass** die erste Dichtlippe einen angrenzenden Abschnitt und einen eingebetteten Abschnitt umfasst, der sich von dem angrenzenden Abschnitt zur Oberseite der Trennleiste erstreckt, wobei der angrenzende Abschnitt eine angrenzende bogenförmige Oberfläche aufweist, die mit dem Boden des Glaslaufkanals zusammenpasst, und der eingebettete Abschnitt in den Spalt zwischen der Oberseite der Trennleiste und dem Glaslaufkanal eingebettet ist.

3. Fensteraufbau nach Anspruch 1, **dadurch gekennzeichnet, dass** die Höhe der zweiten Dichtlippe größer ist als der Abstand zwischen der Innenfläche der Trennleiste und dem Dichtleistenkörper.

4. Fensterkonstruktion nach Anspruch 1, **dadurch gekennzeichnet, dass** der Dichtleistenkörper und die erste und zweite Dichtlippe aus elastischem Material hergestellt sind.

5. Die Fensterkonstruktion nach Anspruch 4, **dadurch gekennzeichnet, dass** das elastische Material ein Gummimaterial mit Wasserdichtigkeit ist.

6. Die Fensterkonstruktion nach Anspruch 1, **dadurch gekennzeichnet, dass** der Dichtungsstreifenkörper und die erste und zweite Dichtlippe integrale Spritzgussstrukturen sind.

7. Ein Automobil, das die Fensterstruktur nach einem der Ansprüche 1-6 umfasst.

## Revendications

1. Structure de fenêtre comprenant un châssis de fenêtre, une bande d'étanchéité et une barre de séparation (2), dans laquelle un canal de passage de verre (1) est disposé sur le châssis de fenêtre, la bande d'étanchéité est disposée à l'intérieur du canal de passage de verre, la barre de séparation est reliée au châssis de fenêtre pour diviser le châssis de fenêtre ; la bande d'étanchéité comprend un corps de bande d'étanchéité (4) pourvu d'une première lèvre d'étanchéité (4-1) et la première lèvre d'étanchéité s'étend hors du canal de passage de verre et est en ajustement étanche avec le haut de la barre de séparation,
**caractérisé en ce que** le corps de la bande d'étanchéité est également pourvu d'une deuxième lèvre d'étanchéité (4-2) disposée sous la première lèvre d'étanchéité et la deuxième lèvre d'étanchéité est étroitement fixée à la surface intérieure de la barre de séparation.

2. Structure de fenêtre selon la revendication 1, **caractérisée en ce que** la première lèvre d'étanchéité comprend une partie en butée et une partie encastrée s'étendant de la partie en butée vers le haut de la barre de séparation, dans laquelle la partie en butée a une surface en forme d'arc en butée équipée du fond du canal de passage du verre et la partie encastrée est encastrée dans l'espace entre le haut de la barre de séparation et le canal de passage du verre.

3. Structure de fenêtre selon la revendication 1, **caractérisée en ce que** la hauteur de la deuxième lèvre d'étanchéité est supérieure à la distance entre la surface intérieure de la barre de séparation et le corps de la bande d'étanchéité.

4. Structure de fenêtre selon la revendication 1, **caractérisée en ce que** le corps de la bande d'étanchéité et les première et deuxième lèvres d'étanchéité sont tous fabriqués en matériau élastique.

5. Structure de fenêtre selon la revendication 4, **caractérisée en ce que** le matériau élastique est un matériau en caoutchouc étanche à l'eau.

6. Structure de fenêtre selon la revendication 1, **caractérisée en ce que** le corps de la bande d'étanchéité et les première et deuxième lèvres d'étanchéité sont des structures moulées par injection intégrées.

7. Véhicule automobile comprenant la structure de fenêtre selon l'une quelconque des revendications 1 à 6.
